# EUROPÄISCHE PATENTSCHRIFT

(11) **EP 3 088 050 B1**
(45) Veröffentlichungstag und Bekanntmachung des Hinweises auf die Patenterteilung: **15.11.2017**
(21) Anmeldenummer: 15186201.8
(22) Anmeldetag: 22.09.2015
(51) Int. Cl.: A62C 33/04, F04D 29/70, F16L 33/12, B01D 35/02, B25B 5/00

(54) **DRAHTSCHUTZKORB**
WIRE PROTECTION BASKET
CAGE DE PROTECTION MÉTALLIQUE

(30) Priorität: 29.04.2015 DE 102015207943
(43) Veröffentlichungstag der Anmeldung: 02.11.2016
(73) Patentinhaber: AWG Fittings GmbH, 89177 Ballendorf (DE)
(72) Erfinder: Steinhauser, Leo, 88451 Dettingen/Iller (DE)
(74) Vertreter: Dr. Weitzel & Partner

(56) Entgegenhaltungen:
- DE-U1-202013 101 030
- JP-A- 2011 139 848
- US-B1- 8 834 713
- Hans Kemper: "Kapitel 5.1 Saugkorb A" In: "Gerätekunde Schläuche und Armaturen", 31. Dezember 2009 (2009-12-31), XP055298406, ISBN: 978-3-609-62368-9 Seiten 44-46, * das ganze Dokument *

## Beschreibung

Die Erfindung betrifft einen Drahtschutzkorb zum Schützen eines Saugkorbes bei der Wasserentnahme aus offenen Gewässern.

Der Einsatz von Drahtschutzkörben um Saugkörbe ist bei der Wasserentnahme aus offenen Gewässern, insbesondere durch die Feuerwehr allgemein bekannt. Der Saugkorb selbst besteht typischerweise aus einer Festkupplung mit einer darin angebrachten Rückschlagklappe und einem Schlauchanschluss auf der einen Seite. Auf der anderen Seite ist dann das sogenannte Sieb angebracht, welches verhindert, dass Steine sowie kleinere und mittlere Schmutzpartikel bei der Wasserentnahme angesaugt werden. Die Festkupplung kann außerdem mit einer Anhebevorrichtung, beispielsweise einer Öse, zur Aufnahme eines Seils oder dergleichen versehen sein. Nun ist es so, dass bei der Wasserentnahme aus offenen Gewässern ein derartiger Saugkorb leicht von grobem Schmutz wie Blättern oder Ästen verstopft wird bzw. sofern der Grund schlammig ist, in diesen Schlamm einsinkt und somit sehr viel Schmutz mitansaugt. Es ist bei der Feuerwehr daher allgemein bekannt und üblich, einen sogenannten Drahtschutzkorb um den Saugkorb anzubringen. Dieser ist zumindest in der Hauptansaugrichtung typischerweise über ein Drahtgestell beabstandet von dem Sieb gehalten und wird dann normalerweise über den gesamten Saugkorb gestülpt und im Bereich des Schlauchanschlusses des Saugkorbes mit diesem oder dem daran angeschlossenen Schlauch verbunden. Hierzu dient meist ein Gummispanner oder eine in den flexiblen Rand des Drahtschutzkorbes eingezogenes Schnurstück oder dergleichen. Druckschriftlich beschrieben wird ein solcher Aufbau durch Hans Kemper: "Kapital 5.1 Saugkorb A", in: "Gerätekunde und Armaturen", 31.Dezember 2009, XP 055298406, ISBN: 978-3-609-62368-9, Seiten 44-46.

In der Praxis ist dieser Aufbau vergleichsweise schwierig zu handhaben. Insbesondere in der Stresssituation bei einem Einsatz der Feuerwehr ist die Befestigung über einen Gummispanner oder eine Schnur, welche beispielsweise verknotet werden muss, sehr schwierig. Dies gilt vor allem auch dann, wenn die bei der Feuerwehr üblichen Schutzhandschuhe getragen werden, da mit diesen eine sichere und zuverlässige Befestigung entsprechend aufwändig und langwierig oder gegebenenfalls auch gar nicht möglich ist. Ein anderer Nachteil besteht darin, dass in dem Feuerwehrfahrzeug der Saugkorb und der Drahtschutzkorb typischerweise unabhängig voneinander gelagert werden müssen, da der Drahtschutzkorb erst dann an dem Saugkorb angebracht werden kann, wenn dieser mit dem Schlauch verbunden ist, da im Bereich des Schlauchanschlusses typischerweise auch die Befestigung des Drahtschutzkorbes liegt. Dies macht die Lagerung vergleichsweise platzaufwändig und kann im Einsatzfall zu einer unerwünschten zeitlichen Verzögerung führen, bis der einsatzbereite Saugkorb mit dem Drahtschutzkorb verfügbar ist.

Die US 8,834,713 B1 beschreibt einen Saugkorb selbst, welcher über eine Spanneinrichtung mit einem Schlauch- oder Rohrende verbindbar ist.

Zum weiteren allgemeinen Stand der Technik kann außerdem auf die DE 20 2013 101 030 U1 sowie die JP 2011-019848 A hingewiesen werden.

Die Aufgabe der vorliegenden Erfindung besteht nun darin, einen Drahtschutzkorb in der Art weiterzubilden, dass er einfach und effizient handhabbar ist, und dass bei seinem Zusammenwirken mit einem Saugkorb insbesondere die oben genannten Nachteile vermieden werden können.

Erfindungsgemäß wird diese Aufgabe durch einen Drahtschutzkorb mit den Merkmalen im Anspruch 1 gelöst. Vorteilhafte Ausgestaltungen und Weiterbildungen des erfindungsgemäßen Drahtschutzkorbes ergeben sich aus den hiervon abhängigen Unteransprüchen.

Der Drahtschutzkorb gemäß der Erfindung weist ähnlich wie ein Drahtschutzkorb gemäß dem Stand der Technik ein von einem Geflecht umschlossenes Volumen auf. Er hat außerdem eine Öffnung, welche zur Aufnahme zumindest eines Siebes des Saugkorbs ausgebildet ist. Die Öffnung weist einen die Öffnung umgebenden Rand auf, welcher mit einer Befestigungseinrichtung verbunden ist, welche zum Befestigen des Randes an dem Saugkorb ausgebildet ist. Dabei ist es gemäß der Erfindung so, dass die Befestigungseinrichtung aus einem oder mehreren in Umfangsrichtung wenigstens einmal unterbrochenen eigenstabilen Segmenten ausgebildet ist. Diese Segmente umschließen dabei die gesamte Umfangsrichtung mit Ausnahme der wenigstens einen Unterbrechung. Außerdem ist bei dem erfindungsgemäßen Drahtschutzkorb wenigstens eine in Umfangsrichtung wirkende Spanneinrichtung vorgesehen, über welche der Umfang der Befestigungseinrichtung veränderbar ist. Eine solche Spanneinrichtung kann zwischen einem gespannten und einem entspannten Zustand gewechselt werden. Hierdurch ändert sich bei dem erfindungsgemäßen Drahtschutzkorb der Umfang der Befestigungseinrichtung. Der Umfang der Befestigungseinrichtung kann sich dabei entweder verringern oder erweitern. Die Befestigungseinrichtung kann so idealerweise mit einem Gegenelement, welches beispielsweise an dem Saugkorb angebracht ist, in der Art zusammenwirken, dass die Befestigungseinrichtung im gespannten Zustand der Spanneinrichtung dieses Gegenelement von außen umspannt oder von innen gegen eine Innenwand des Gegenelements gepresst wird. Hierdurch lässt sich der Drahtschutzkorb einfach und effizient im Bereich des Saugkorbes durch eine Betätigung der Spanneinrichtung befestigen.

Der erfindungsgemäße Drahtschutzkorb kann so einerseits schnell und einfach mit dem Saugkorb verbunden werden. Andererseits lässt sich der erfindungsgemäße Drahtschutzkorb auch so ausbilden, dass er in der Art mit dem Saugkorb verbunden werden kann, dass eine Aufnahme des Saugkorbes für einen Schlauch nicht beeinträchtigt wird. Der Drahtschutzkorb kann so auf dem Saugkorb verbleiben, was einerseits eine einfache und übersichtliche Lagerung im Einsatzfahrzeug ermöglicht, und was andererseits Zeit einspart, da der Saugkorb zusammen mit dem Drahtschutzkorb praktisch einsatzbereit gelagert wird und nicht erst im Falle eines Einsatzes zusammengesucht und zusammengefügt werden muss.

Die Befestigungseinrichtung weist ein im Wesentlichen U-förmiges Profil auf. Um den Einsatz noch weiter zu erleichtern, ist es ferner vorgesehen, dass ein an dem dem Drahtschutzkorb zugewandten (unteren) Ende liegender Schenkel des Us länger als der an dem dem Drahtschutzkorb abgewandten Ende liegende (obere) Schenkel ausgebildet ist. Hierdurch ist es möglich, den Aufbau so weit zu öffnen, dass der obere Schenkel auf einem größeren Durchmesser liegt, als der größte Durchmesser des Flansches. Der untere Schenkel hat dabei immer einen kleineren Durchmesser als der Flansch, sodass der Drahtschutzkorb sehr einfach über das Sieb geschoben werden kann, bis der Flansch an dem unteren Schenkel anschlägt. Dann kann durch eine entsprechende Betätigung der Spanneinrichtung der Aufbau sehr einfach, zuverlässig und schnell in der richtigen Position des Drahtschutzkorbs gegenüber dem Saugkorb fixiert werden. Anstelle eines um den gesamten Umfang umlaufenden längeren Schenkels unten an der Befestigungseinrichtung wären auch einige über den Durchmesser des oberen Schenkels überstehende Anschläge im Bereich des unteren Schenkels denkbar, insbesondere wenigstens drei Stück über den Umfang der Befestigungseinrichtung verteilt.

Gemäß einer vorteilhaften Weiterbildung der Idee sind dabei wenigstens zwei in Umfangsrichtung benachbarte Enden des Segments oder der Segmente in wenigstens einem Zustand der Spanneinrichtung beabstandet zueinander angeordnet und durch die Spanneinrichtung bei einer Zustandsänderung der Spanneinrichtung in ihrem Abstand zueinander veränderbar. Dafür kann beispielsweise ein einseitig geschlitzter in sich elastischer Ring eingesetzt werden, welcher über die Spanneinrichtung von einer leicht geöffneten Stellung in eine zusammengespannte Stellung verändert werden kann. Die Kontur muss dabei nicht zwingend kreisförmig sein, auch wenn dies die bevorzugte Ausgestaltung des Saugkorbes ist, mit welchem die Befestigungseinrichtung zusammenwirken soll, sondern kann je nach Ausgestaltung des Saugkorbes natürlich auch als Vieleck mit drei oder mehr Ecken ausgebildet sein.

Gemäß einer sehr vorteilhaften Weiterbildung der Idee ist es dabei ferner vorgesehen, dass der Umfang der Befestigungseinrichtung in einem gespannten Zustand der Spanneinrichtung kleiner als in einem ungespannten Zustand der Spanneinrichtung ist. Über diesem Aufbau, bei welchem die Spanneinrichtung den Umfang der Befestigungseinrichtung verkleinert, wird ein besonders effizienter Einsatz des Drahtschutzkorbes möglich. Dieser kann nämlich außen über einen bestehenden Flansch oder dergleichen des Saugkorbes geschoben und dann durch eine Betätigung der Spanneinrichtung und dadurch die Verringerung des Umfangs der Befestigungseinrichtung, gesichert werden.

Gemäß einer besonders günstigen und vorteilhaften Ausgestaltung der Idee können die Segmente dabei als Ringsegmente ausgebildet sein. Die Ringsegmente, welche letztlich einen ovalen oder kreisförmigen Umfang überdecken, sind für den Aufbau besonders geeignet, da die meisten verfügbaren Saugkörbe beispielsweise in dem Bereich, in dem sie mit dem Sieb verbunden sind, einen kreisförmigen Flansch aufweisen, mit dem die Befestigungseinrichtung dann sehr effizient zusammenwirken kann.

Die Befestigungseinrichtung kann dafür gemäß einer vorteilhaften Weiterbildung des erfindungsgemäßen Drahtschutzkorbes aus zwei halbringförmigen Ringsegmenten bestehen, welche an ihren einen in Umfangsrichtung benachbarten Enden gelenkig miteinander verbunden sind, und welche an ihren anderen in Umfangsrichtung benachbarten Enden über die Spanneinrichtung verbunden oder verbindbar sind. Hierdurch wird ein besonders einfacher und effizienter Aufbau erreicht, bei dem die Befestigungseinrichtung aus wenig Teilen ausgebildet ist, welche durch die gelenkige Anbindung untereinander so bewegt werden können, dass eine mechanische Belastung des Materials der Ringsegmente vergleichsweise gering ist, insbesondere gegenüber einem einzelnen Ringsegment, welches immer wieder im Rahmen der Materialelastizität auf- und zugefedert werden müsste. Es ist nun außerdem vorgesehen, dass die Befestigungseinrichtung in ihrem Querschnitt dazu ausgebildet ist, mit einem korrespondierenden Bereich des Saugkorbes formschlüssig zusammenzuwirken. Eine solche Ausgestaltung der Befestigungseinrichtung beispielsweise in der Art, dass diese im Wesentlichen U-förmig ausgebildet ist und so einen Flansch des Saugkorbes sicher und zuverlässig umschließt, um so im Formschluss oder bei einem entsprechenden Abstand der Teile untereinander zumindest so zusammenzuwirken, dass die Befestigungseinrichtung gegenüber dem Saugkorb in axialer Richtung nicht oder nicht um ein nennenswertes Wegstück verschoben werden kann.

Gemäß einer vorteilhaften Weiterbildung der Idee kann dabei der Rand des Drahtschutzkorbs über mehrere um den Umfang der Aufnahmeöffnung verteilt angeordnete Schlaufen, insbesondere aus Draht, oder ein spiralförmig verlaufendes Kunststoff- oder Drahtstück mit Aufnahmen der Befestigungseinrichtung verbunden sein. Die Aufnahmen können dabei sehr einfach als Bohrungen im Rand der Befestigungseinrichtung ausgeführt sein. Alternativen hierzu wie beispielsweise Haken, Ösen oder dergleichen sind selbstverständlich auch denkbar. Insbesondere sind die Schlaufen oder das spiralförmig verlaufende Kunststoff- oder Drahtstück dabei aus demselben Material wie das Geflecht ausgebildet und stellen so zusammen mit der Elastizität des Geflechts sicher, dass der Drahtschutzkorb die Änderung des Umfangs des Befestigungselements beim Verspannen bzw. Entspannen der Spanneinrichtung problemlos mitmacht.

Die wenigstens eine Spanneinrichtung selbst kann nun insbesondere in Form eines Kniehebelspanners oder Drehspannverschlusses ausgebildet sein. Vor allem ein solcher Kniehebelspanner, welcher beispielsweise fest mit zwei beiden halbringförmigen Ringsegmenten verbunden ist, welche an ihren anderen Enden gelenkig miteinander verbunden sind, wenn der Drahtschutzkorb gemäß der oben beschriebenen Ausführungsvariante ausgestaltet ist, stellt einerseits eine zuverlässige Verbindung sicher und ist andererseits durch eine geeignete Ausgestaltung des Hebels auch in Stresssituationen und/oder mit dicken Handschuhen sehr leicht zu bedienen. Ein solcher Kniehebelspanner weist dabei die vorteilhaften Eigenschaften eines Kniehebels auf, sodass sich über den Betätigungsweg des Kniehebels hinweg der Bewegungsweg entsprechend verringert und die Kraft ansteigt. Sobald der Kniehebel über einen Totpunkt gelangt, bleibt er selbsthemmend in dieser Position, sodass ein sehr einfacher Aufbau entsteht.

Gemäß einer besonders vorteilhaften Weiterbildung dieser Idee kann beim Einsatz eines Kniehebelspanners dieser direkt oder über ein in Umfangsrichtung um die Segmente/das Segment umlaufendes Umschlingungsmittel mit den Enden des Segments/der Segmente in Verbindung stehen. Besonders einfach und effizient kann der Einsatz eines umlaufenden Profils mit einem darübergelegten Umschlingungsmittel sein, welches über die Spanneinrichtung verspannt wird. Dies ermöglicht einen sehr flexiblen Einsatz. Andererseits kann durch das direkte Anbringen der Spanneinrichtung, beispielsweise eines Kniehebelspanners, an den Segmenten ein besonders kompakter Aufbau entstehen, welcher aus wenigen miteinander verbundenen Teilen besteht, sodass lediglich der Drahtschutzkorb mit allen direkt mit ihm verbundenen Teilen bevorratet und gehandhabt werden muss.

Eine Alternative zu dieser Ausgestaltung stellt ein Drehspannverschluss dar. Derartige Drehspannverschlüsse sind ebenfalls aus dem Stand der Technik bekannt. Sie können beispielsweise vorgefertigte Bänder oder andere Umschlingungsmittel wie Seile oder Drähte fest miteinander verspannen. Dafür sind beispielsweise im Bereich der Bänder entsprechende Zahnstangenprofile eingebaut, welche durch das Drehen eines mit einem Bedienknopf versehenen Zahnrades durch einen Eingriff einmal auf der einen Seite des Zahnrads und einmal auf der gegenüberliegenden Seite des Zahnrads, jeweils in radialer Richtung gesehen, gegeneinander verspannt werden können. Idealerweise ist der Bedienknopf dabei selbsthemmend oder wird durch eine Ratsche oder dergleichen in der eingestellten Position gehalten, beispielsweise bis er herausgezogen oder eingedrückt wird, um die verspannten Elemente wieder zu lösen. Auch für Schnüre, Drähte oder dergleichen sind derartige Aufbauten bekannt. Die Schnüre oder Drähte werden dabei formschlüssig über Krallen oder insbesondere reibschlüssig im Bereich des Bedienknopfes gehalten und wiederum einmal im oberen Bereich und einmal im radial gegenüberliegenden unteren Bereich bewegt, sodass diese sich bei geeigneter Drehrichtung des Bedienknopfes gegeneinander verspannen.

Gemäß einer sehr vorteilhaften Weiterbildung der Idee kann es dabei vorgesehen sein, dass die wenigstens einen Spanneinrichtung im gespannten Zustand selbsthemmend ist. Eine solche im gespannten Zustand selbsthemmende Spanneinrichtung ist von besonderem Vorteil, da diese ohne weitere Maßnahmen sicher im gespannten Zustand verharrt, bis diese bewusst aus dem gespannten Zustand heraus entspannt wird. Dadurch ist eine zuverlässige Funktionalität über den gesamten gewünschten Zeitraum der Wasserentnahme gewährleistet.

Gemäß einer vorteilhaften Weiterbildung der Idee kann es ferner vorgesehen sein, dass die wenigstens eine Spanneinrichtung in Form einer Klappfaltschließe oder eines Ratschenverschlusses ausgebildet ist. Eine solche Klappfaltschließe ist beispielsweise aus dem Bereich von Armbanduhren bekannt. Über drei hebelartige Elemente wird ein um einen Umfang verlaufendes Element in seiner Länge verändert, indem diese Elemente entsprechend aufgeklappt oder eingeklappt werden und im eingeklappten Zustand zumindest teilweise parallel zueinander liegen. Gemäß einer sehr vorteilhaften Weiterbildung dieser Idee kann es dabei vorgesehen sein, dass die Klappfaltschließe über wenigstens ein Rastelement im verschlossenen Zustand fixierbar ist. Ein solches Rastelement, welches in ein Gegenelement einrastet und über eine in radialer Richtung aufgebrachte Zugkraft oder einen Entriegelungsmechanismus wieder entrastet werden kann, stellt eine einfache und sichere Handhabe einer derartigen Befestigungseinrichtung mit einer Spanneinrichtung in Form einer Klappfaltschließe sicher.

Die alternative Ausführungsform mittels eines Ratschenverschlusses ist aus dem allgemeinen Stand der Technik ebenfalls bekannt. Ein solcher Ratschenverschluss wird typischerweise in Bereichen eingesetzt, in denen schnell und ohne Werkzeuge eine zuverlässige Befestigung erzielt werden soll. Insbesondere werden derartige Ratschenverschlüsse zur Befestigung von Fahrradreifen auf Fahrradträgern eingesetzt. Sie bestehen im Wesentlichen aus einem Ende, welches in der Art eines Zahnriemens mit schräg verlaufenden Zahnflanken ausgebildet ist. Am anderen Ende ist eine Aufnahme hierfür angeordnet, welche zumindest ein Sperrelement bzw. eine Raste aufweist, welches beispielsweise über eine Federkraft in Richtung der Zähne gedrückt wird und zwischen diesen einrastet. Über eine vorzugsweise mit einem Hebel ausgerüstete Ratsche, welche eine Art Zahnrad aufweist, kann dann unterstützt durch die Hebelkraft der Zahnriemen in Richtung der Raste verschoben werden, welche diesen aufgrund der abgeschrägten Zahnprofile in die eine Richtung passieren lässt. Hierdurch lässt sich eine vergleichsweise hohe Spannkraft aufbauen. Erst wenn die Raste wieder von den Zahnriemen abgehoben wird, öffnet sich die Verbindung.

Wie bereits mehrfach erwähnt, eignet sich der erfindungsgemäße Drahtschutzkorb insbesondere, um im Zusammenspiel mit einem an sich bekannten und herkömmlichen Saugkorb sehr einfach und effizient zur Entnahme von Wasser aus einem offenen Gewässer eingesetzt zu werden. Ein beispielhafter Aufbau des erfindungsgemäßen Drahtschutzkorbs sowie sein Zusammenwirken mit einem Saugkorb werden nachfolgend anhand eines Ausführungsbeispiels unter Bezugnahme auf die Figuren näher dargestellt. Außerdem werden verschiedene denkbare Arten von Spanneinrichtungen rein beispielhaft beschrieben. Dabei ergeben sich aus dem Ausführungsbeispiel weitere vorteilhafte Ausgestaltungen und Varianten des erfindungsgemäßen Drahtschutzkorbs.

Es zeigen:
- Figur 1: einen Saugkorb in einer möglichen Ausführungsform gemäß dem Stand der Technik;
- Figur 2: den Saugkorb aus Figur 1 mit einem Drahtschutzkorb in einer möglichen Ausgestaltung gemäß der Erfindung;
- Figur 3: eine prinzipmäßige Schnittdarstellung gemäß der Linie III-III in Figur 2;
- Figur 4: eine Draufsicht auf ein Befestigungselement des erfindungsgemäßen Drahtkorbs gemäß Figur 2;
- Figur 5: eine alternative Ausführungsform einer Spanneinrichtung;
- Figur 6: eine weitere alternative Ausführungsform einer Spanneinrichtung;
- Figur 7: eine weitere alternative Ausführungsform einer Spanneinrichtung; und
- Figur 8: eine weitere alternative Ausführungsform einer Spanneinrichtung in zwei Zuständen.

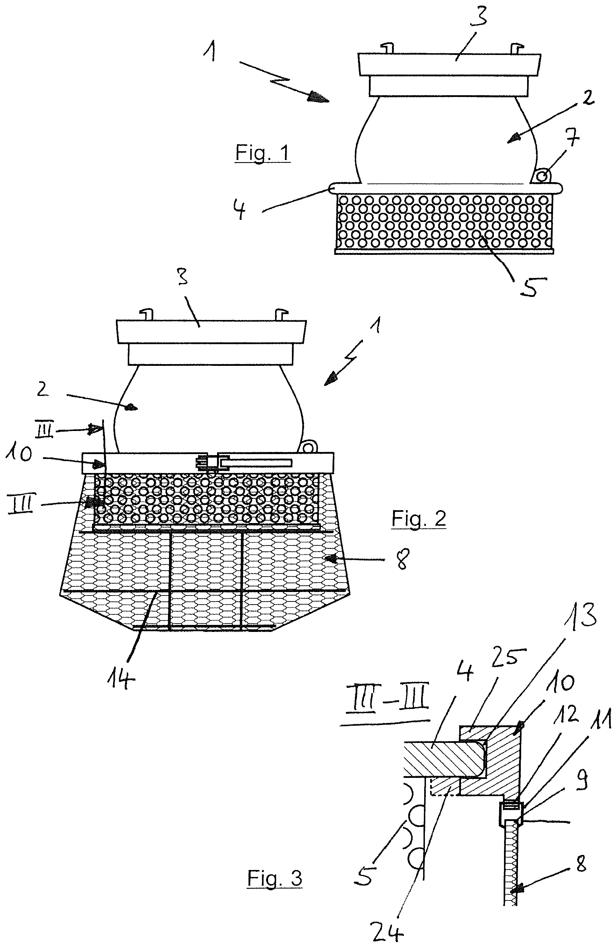

In der Darstellung der Figur 1 ist ein Saugkorb 1 zu erkennen, wie er beispielsweise aus dem Stand der Technik bekannt ist. Er besteht im Wesentlichen aus einer Festkupplung 2, welche auf ihrer einen Seite, in der Darstellung der Figur 1 oben, einen Schlauchanschluss 3, beispielsweise einen genormten Schlauchanschluss 3, aufweist. Auf der gegenüberliegenden Seite in axialer Richtung ist an einem Flansch 4 der Festkupplung 2 ein Sieb 5 angeordnet. Dieses Sieb 5 kann beispielsweise aus einem umlaufenden Lochblech und einem in der Darstellung der Figur 1 unten angebrachten Deckel 6, welcher ebenfalls als Lochblech ausgebildet ist, bestehen. Das Sieb 5 kann beispielsweise mit dem Flansch 4 verschraubt sein. Der Saugkorb 1 in der Darstellung der Figur 1 weist außerdem eine mit 7 bezeichnete Öse auf, über welche er bei der Verwendung in einem offenen Gewässer beispielsweise über ein Seil oder dergleichen gesichert und nach Gebrauch wieder angehoben werden kann.

Um zu verhindern, dass grober Schmutz in den Bereich des Siebes 5 gelangt, und um zu verhindern, dass der Saugkorb 1 beispielsweise bei einem schlammigen Untergrund in diesen einsinkt, ist um den Bereich des Siebes 5 in der Darstellung der Figur 2 ein in seiner Gesamtheit mit 8 bezeichneter Drahtschutzkorb angeordnet. Dieser Drahtschutzkorb 8 weist in seinem oberen Bereich von einem Rand 9 umgebene Öffnung auf, in welche das Sieb 5 des Saugkorbes 1 ragt. Der Rand 9 ist außerdem mit einer Befestigungseinrichtung 10 verbunden, beispielsweise über Drahtschlaufen 11, welche in das durchgängige Material des Drahtschutzkorbes 8 im Bereich seines Randes 9 einerseits und in Bohrungen 12 in der Befestigungseinrichtung 10 andererseits eingreifen.

Dies ist aus der Darstellung der Figur 3, welche einen prinzipmäßigen Schnitt gemäß der Linie III-III in Figur 2 zeigt, erkennbar. Außerdem ist erkennbar, dass die Befestigungseinrichtung 10 ein im Wesentlichen U-förmiges Profil aufweist, welches eine in Umfangsrichtung umlaufende U-förmige Ausnehmung 13 umfasst. In diese Ausnehmung 13 ragt der Flansch 4 hinein, sodass sich ein Formschluss oder ein Quasi-Formschluss ergibt, durch welchen die Befestigungseinrichtung 10 und mit ihr der gesamte Drahtschutzkorb 8 auf dem Flansch 4 gehalten wird. Der Drahtschutzkorb 8 weist außerdem in an sich bekannter Art und Weise ein Drahtgestell 14, welches wiederum in der Darstellung der Figur 2 angedeutet ist, auf. Dieses stellt sicher, dass ein gewisser Abstand des Drahtschutzkorbes 8 vom Sieb 5 in jeder Situation gewährleistet bleibt.

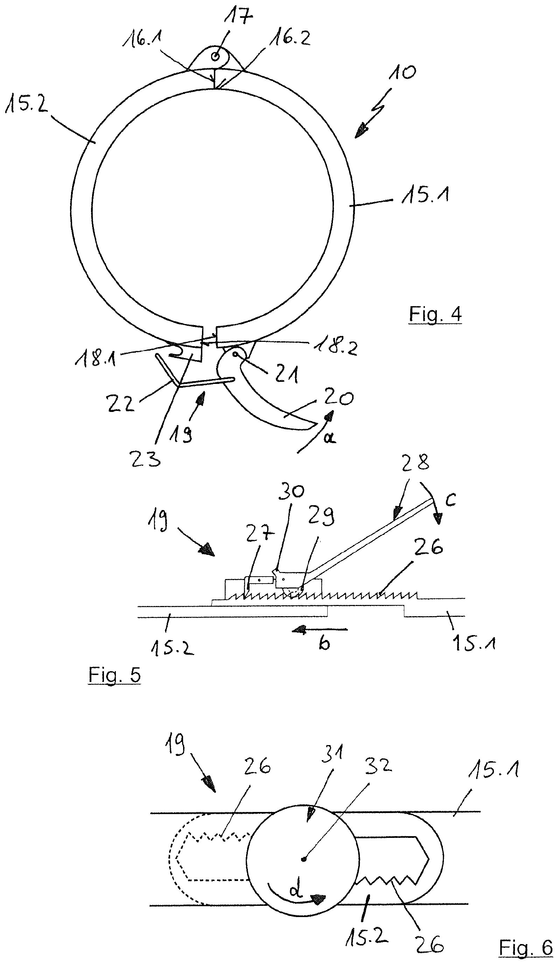

Um den Drahtschutzkorb 8 über die Befestigungseinrichtung 10 nun einfach und effizient an dem Flansch 4 des Saugkorbes 1 anbringen zu können, kann die Befestigungseinrichtung 10 beispielsweise in der in Figur 4 gezeigten Art und Weise ausgebildet sein. Sie besteht bei diesem Aufbau aus einem ersten in etwa halbkreisförmigen Ringsegment 15.1 sowie einem zweiten vergleichbar ausgeführten Ringsegment 15.2. In der Darstellung der Figur 4 im Bereich der oberen in Umfangsrichtung benachbart zueinander angeordneten Enden 16.1 und 16.2 der Ringsegmente 15.1 und 15.2 sind diese über ein Gelenk mit einer Drehachse 17 gelenkig miteinander verbunden. Die Ringsegmente können also geöffnet werden, sodass sich ihr Umfang entsprechend vergrößert. Am anderen Ende der Ringsegmente 15.1, 15.2 sind die mit 18.1 und 18.2 bezeichneten Enden beabstandet zueinander angeordnet. Eine Spanneinrichtung 19, hier in Form eines Kniehebelspanners ist in diesem Bereich angeordnet. Der Kniehebelspanner als Spanneinrichtung 19 besteht aus einem Hebel 20, welcher gelenkig über eine Gelenkachse 21 mit dem einen Ringsegment 15.1 verbunden ist. Außerdem ist ein Bügel 22 gelenkig mit dem Hebel 20 verbunden. Im Bereich des anderen Ringsegments 15.2 befindet sich ein Haken 23, in welche der Bügel 22 in der in Figur 4 dargestellten Stellung des Hebels 20 eingreifen kann. Wird der Hebel 20 dann, nachdem der Bügel 22 in den Haken 23 gelegt worden ist, in der mit a bezeichneten Richtung bewegt, also gegen das Ringsegment 15.1 als Anschlag gedrückt, so verspannt er die Enden 18.1 und 18.2 der Ringsegmente 15.1 und 15.2 gegeneinander. Wie es bei Kniehebeln üblich ist, wird die Bewegung des Hebels 20 durch ein Anschlagen an dem Ringsegment 15.1 entsprechend begrenzt und der Aufbau ist, bis zu einem erneuten Anheben des Hebels 20 selbsthemmend.

Der Aufbau wird nun so konstruiert, dass die Befestigungseinrichtung 10 im entspannten Zustand der Spanneinrichtung 19 einen größeren Durchmesser als der Flansch 4 aufweist und so über diesen geschoben werden kann. Durch ein Verspannen der Ringsegmente 15.1 und 15.2 gegeneinander, durch ein Anlegen des Spannhebels 20 an dem einen Ringsegment 15.1 wird der Umfang der Befestigungseinrichtung 10 dann entsprechend verringert, sodass es zu der in Figur 3 gezeigten Anlage des Profils der Befestigungseinrichtung 10 im Bereich des Flanschs 4 kommt. Um den Einsatz noch weiter zu erleichtern, ist es, wie es in der Darstellung der Figur 3 dargestellt ist, ferner vorgesehen, dass der in dem in Figur 3 gezeigten unteren Ende liegende mit 24 bezeichnete Schenkel des Us länger als der obere Schenkel 25 ausgebildet ist. Hierdurch ist es möglich, den Aufbau so weit zu öffnen, dass der obere Schenkel 25 auf einem größeren Durchmesser liegt, als der größte Durchmesser des Flansches 4. Der untere Schenkel 24 hat dabei immer einen kleineren Durchmesser als der Flansch 4, sodass der Drahtschutzkorb 8 sehr einfach über das Sieb geschoben werden kann, bis der Flansch 4 an dem unteren Schenkel 24 anschlägt. Dann kann durch eine entsprechende Betätigung des Kniehebels der Aufbau sehr einfach, zuverlässig und schnell in der richtigen Position des Drahtschutzkorbs 8 gegenüber dem Saugkorb 1 fixiert werden. Anstelle eines um den gesamten Umfang umlaufenden längeren Schenkels 24 unten an der Befestigungseinrichtung 10 in der Darstellung gemäß Figur 3 sind auch einige über den Durchmesser des oberen Schenkels 25 überstehende Anschläge im Bereich des unteren Schenkels 24 denkbar, insbesondere wenigstens 3 Stück über den Umfang der Befestigungseinrichtung 10 verteilt.

Selbstverständlich ist die Spanneinrichtung 19 in der Darstellung gemäß Figur 4 eine mögliche beispielhafte Ausgestaltung einer Spanneinrichtung 19. Der in Figur 4 beispielhaft dargestellte Kniehebelspanner könnte auch so ausgestaltet sein, dass der Bügel 22 fest in einer Bohrung des Ringsegments 15.2 aufgenommen worden ist, sodass der Schritt des Einhängens entfällt und der Aufbau noch einfacher und effizienter betätigt werden kann. Um beide Möglichkeiten, nämlich ein Trennen einerseits und eine einfache und effiziente Betätigung andererseits zu erhalten, kann es auch vorgesehen sein, dass der Haken 23 so ausgebildet ist, dass er den Bügel typischerweise hinter einer Rastnase oder Ähnlichem hält, sodass im Normalbetrieb der Aufbau sehr einfach und effizient geöffnet und geschlossen werden kann. Bei Bedarf kann der Bügel dann beispielsweise mit deutlich mehr Kraft und/oder unter Zuhilfenahme eines Werkzeugs aus einem derartig ausgebildeten Haken 23 ausgerastet werden, um so den Aufbau der Befestigungseinrichtung 10 analog zur Darstellung in Figur 4 ganz öffnen zu können.

Weitere Alternativen für die Spanneinrichtung 19 sind selbstverständlich ebenso denkbar. So ist beispielhaft in der Darstellung der Figur 5 eine Spanneinrichtung 19 dargestellt, welche wiederum ein analog zur Darstellung in Figur 4 mit 15.2 bezeichnetes und ein mit 15.1 bezeichnetes Segment gegeneinander verspannen kann. Das in der Darstellung der Figur 5 mit 15.1 bezeichnete Segment weist an seiner Oberfläche eine Verzahnung 26 auf. Diese wirkt mit einer Raste bzw. Sperrklinke 27 in der Art zusammen, dass ein Verschieben der Verzahnung bei eingerasteter Sperrklinke nur in Richtung des mit b bezeichneten Pfeils möglich ist. Ein Verschieben in die Gegenrichtung kann erst durch ein Anheben der Sperrklinke 27 ermöglicht werden. Über ein an sich bekanntes Hebelelement 28 mit einem Zahnrad 29 kann nun in der Art einer Ratsche eine Bewegung des Segments 15.1 in der Richtung b erfolgen. Die Verzahnung 26 wird dabei unter der Sperrklinke 27 durchgeschoben, sodass diese immer wieder in den nachfolgenden Zahn entsprechend einrastet. Im unteren Punkt des Hebels, wenn dieser in der Richtung c auf das Segment 15.1 zubewegt wird, hebt das Zahnrad 29 entsprechend ab, sodass der Hebel zurückbewegt und der Vorgang von Neuem beginnen kann. In dem hier dargestellten Ausführungsbeispiel ist es ferner so, dass im Bereich des Hebelelements 28 ein Vorsprung 30 angeordnet ist. Wird der Hebel entgegen der Richtung c bis zu seinem Anschlag bewegt, dann kommt er mit der federbelastet in Richtung der Verzahnung 26 gedrückten Sperrklinke 27 in Verbindung, sodass diese um ihre Drehachse angehoben wird und die Verzahnung 26 und damit das Segment 15.1 gegenüber dem Segment 15.2 freigibt.

Eine weitere mögliche Ausführungsform einer Spanneinrichtung 19 ist in der Darstellung der Figur 6 beispielhaft dargestellt. Erkennbar ist dabei das Segment 15.2, teilweise verdeckt dahinter und in gestrichelter Linie dargestellt, das Segment 15.1. Ein Drehknopf 31 ist in seinem Inneren in an sich bekannter Art und Weise mit einer Verzahnung versehen. Die Segmente 15.1 und 15.2 weisen ihrerseits ebenfalls eine Verzahnung 26 auf, wobei die Verzahnung 26 des Segments 15.2 unterhalb einer Drehachse 32 des Drehknopfs 31 und die Verzahnung 26 des Segments 15.1 oberhalb derselben liegt. Durch ein Drehen des Drehknopfs 31 beispielsweise in der mit d bezeichneten Richtung kommt es somit zu einem Verspannen der beiden Segmente 15.1 und 15.2 gegeneinander, bei einem Drehen in der Gegenrichtung werden diese verspannt. Vergleichbare Aufbauten sind auch für Seile bzw. Schnüre oder Drähte denkbar, deren Enden im Bereich des Drehknopfs 30 über Formschluss und/oder insbesondere über Reibschluss entsprechend gehalten und somit durch ein Verdrehen des Drehknopfs 31 gegeneinander verspannt werden können.

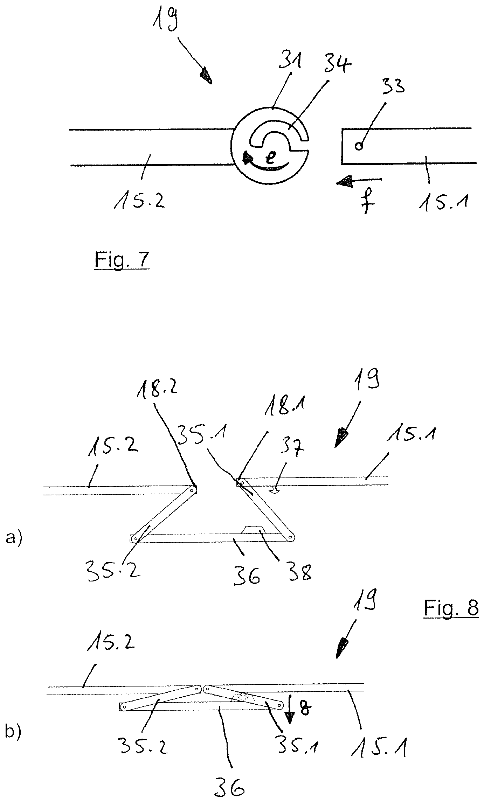

Eine weitere Möglichkeit, über eine Drehbewegung eine Verspannung zu erreichen, ist in der Darstellung der Figur 7 zu erkennen. Das eine Segment 15.2 weist eine Drehscheibe bzw. einen Drehknopf auf, welcher wiederum mit 31 bezeichnet ist. Das andere Segment 15.1 weist beispielsweise einen mit 33 bezeichneten Stift auf. Im Bereich des Drehknopfs 31 ist ein mit 34 bezeichnetes Profil angeordnet. Dieses wirkt mit dem Stift 33 zusammen. Der Stift 33 kann dazu in das Profil eingeführt werden. Wird der Drehknopf 31 nun in der mit e bezeichneten Richtung verdreht, dann wird der Stift 33 und das mit ihm verbundene Segment 15.1 in die mit f bezeichnete Richtung bewegt und somit gegen das Segment 15.2 verspannt.

Eine weitere Möglichkeit zur Realisierung einer Spanneinrichtung 19 ist in der Darstellung der Figur 8 in zwei verschiedenen Zuständen zu erkennen. Die Spanneinrichtung 19 ist dabei in der Art einer Klappfaltschließe ausgebildet. Die beiden Segmente 15.2 und 15.1 sind über wenigstens drei Zwischenelemente 35.1, 35.2 und 36 miteinander verbunden. Dabei sind die Zwischenelemente 35 sowohl mit dem Zwischenelement 36 als auch mit dem jeweiligen Segment 15.2 und 15.1 über Drehachsen verbunden. Der Aufbau kann beispielsweise die in der Figur 8a oben dargestellte Position einnehmen, bei welcher die Enden 18.1 und 18.2 der Segmente 15.1 und 15.2 beabstandet voneinander angeordnet sind. Verschwenkt man nun die Zwischenelemente 35.1 und 35.2 im Wesentlichen in eine Position mit einem sehr flachen Winkel oder parallel zu den Segmenten 15.1, 15.2 und dem Zwischenelement 36, dann verringert sich dieser Abstand deutlich. Über ein Rastelement 37, welches mit einem Gegenelement 38 zusammenwirkt, kann in dem geschlossenen bzw. verspannten Zustand der Figur 8b) das Segment 15.1 gegenüber dem Zwischenelement 36 gesichert werden, um so ein zuverlässiges Halten in der verspannten Position zu gewährleisten. Beispielsweise über einen Knopf zum Entrasten oder über einen Zug an dem Zwischenelement 36 in radialer Richtung im Beispiel der Figur 8b) gemäß dem Pfeil g nach unten kann die Klappfaltschließe dann wieder geöffnet werden.

## Patentansprüche

1. Drahtschutzkorb (8) zum Schützen eines Saugkorbes (1) bei einer Wasserentnahme aus offenen Gewässern, mit:
einem von einem Geflecht umschlossenen Volumen;
einer Öffnung, welcher zur Aufnahme zumindest eines Flansches (4) eines Siebes (5) des Saugkorbes (1) ausgebildet ist;
einem die Öffnung umgebenden Rand (9); und
einer mit dem Rand (9) verbundenen Befestigungseinrichtung (10), welche zur Befestigung des an dem Saugkorb (1) ausgebildet ist; **dadurch gekennzeichnet, dass**
die Befestigungseinrichtung (10) aus einem oder mehreren in Umfangsrichtung wenigstens einmal unterbrochenen eigenstabilen Segment oder Segmenten (15.1, 15.2) ausgebildet ist;
weinigstens eine in Umfangsrichtung wirkende Spanneinrichtung (19) vorgesehen ist, über welche der Umfang der Befestigungseinrichtung (10) veränderbar ist;
die Befestigungseinrichtung (10) ein U-förmiges Profil aufweist, wobei entweder vorgesehen ist, dass ein am unteren Ende liegender Schenkel (24) des Us länger ist als ein oberer Schenkel (25),
oder dass einige über den Durchmesser des oberen Schenkels (25) überstehende Anschläge im Bereich des unteren Schenkels (24) vorgesehen sind,
wobei es möglich ist, den Aufbau soweit zu öffnen, dass der obere Schenkel (25) auf einem größeren Durchmesser liegt als der größte Durchmesser des Flansches (4), und der kleinere Schenkel (24) immer einen kleineren Durchmesser hat als der Flansch (4).

2. Drahtschutzkorb (8) nach Anspruch 1, **dadurch gekennzeichnet, dass** wenigstens zwei in Umfangsrichtung benachbarte Enden (18.1, 18.2) des Segments oder der Segmente (15.1, 15.2) in wenigstens einem Zustand der Spanneinrichtung (19) beabstandet zueinander angeordnet sind, und durch die Spanneinrichtung (19) bei einer Zustandsänderung der Spanneinrichtung (19) in ihrem Abstand zueinander veränderbar sind.

3. Drahtschutzkorb (8) nach Anspruch 1 oder 2, **dadurch gekennzeichnet, dass** der Umfang der Befestigungseinrichtung (10) in einem gespannten Zustand der Spanneinrichtung (19) kleiner als in einem ungespannten Zustand der Spanneinrichtung (19) ist.

4. Drahtschutzkorb (8) nach Anspruch 1, 2 oder 3, **dadurch gekennzeichnet, dass** die Segmente (15.1, 15.2) als Ringsegmente ausgebildet sind.

5. Drahtschutzkorb (8) nach einem der Ansprüche 1 bis 4,
**dadurch gekennzeichnet, dass**
die Befestigungseinrichtung (10) aus zwei halbringförmigen Ringsegmenten (15.1, 15.2) besteht, welche an ihren einen in Umfangsrichtung benachbarten Enden (16.1, 16.2) gelenkig miteinander verbunden sind, und welche an ihren anderen in Umfangsrichtung benachbarten Enden (18.1, 18.2) über die Spanneinrichtung (19) verbunden oder verbindbar sind.

6. Drahtschutzkorb (8) nach einem der Ansprüche 1 bis 5, **dadurch gekennzeichnet, dass** die Befestigungseinrichtung (10) in ihrem Querschnitt dazu ausgebildet ist, mit einem korrespondierenden Bereich des Saugkorbs (1) zusammenzuwirken.

7. Drahtschutzkorb (8) nach einem der Ansprüche 1 bis 6, **dadurch gekennzeichnet, dass** der Rand (9) über mehrere um den Umfang der Aufnahmeöffnung verteilt angeordnete Schlaufen (11) oder ein spiralförmig verlaufendes Filament oder Band mit Aufnahmen in der Befestigungseinrichtung (10) verbunden ist.

8. Drahtschutzkorb (8) nach einem der Ansprüche 1 bis 7, **dadurch gekennzeichnet, dass** die wenigstens eine Spanneinrichtung (19) in Form eines Kniehebelspanners oder eines Drehspannverschlusses ausgebildet ist.

9. Drahtschutzkorb (8) nach einem der Ansprüche 1 bis 8, **dadurch gekennzeichnet, dass** die wenigstens eine Spanneinrichtung (19) direkt oder über ein in Umfangsrichtung um die Segmente/das Segment verlaufende Umschlingungsmittel mit den Segmenten/dem Segment in Verbindung steht.

10. Drahtschutzkorb (8) nach einem der Ansprüche 1 bis 9, **dadurch gekennzeichnet, dass** die wenigstens eine Spanneinrichtung (19) im gespannten Zustand selbsthemmend ist.

11. Drahtschutzkorb (8) nach einem der Ansprüche 1 bis 7, **dadurch gekennzeichnet, dass** die wenigstens eine Spanneinrichtung (19) in Form einer Klappfaltschließe oder eines Ratschenverschlusses ausgebildet ist.

12. Drahtschutzkorb (8) nach einem der Ansprüche 1 bis 11, **dadurch gekennzeichnet, dass** der an dem dem Saugkorb (8) zugewandten Ende liegender Schenkel (24) über den gesamten Umfang länger ausgebildet ist, als der an dem Saugkorb (8) abgewandten Ende liegender Schenkel (25).

13. Drahtschutzkorb (8) nach einem der Ansprüche 1 bis 11, **dadurch gekennzeichnet, dass** der an dem dem Saugkorb (8) zugewandten Ende liegender Schenkel (24) an wenigstens 3 über den Umfang verteilten Stellen länger ausgebildet ist, als der an dem Saugkorb (8) abgewandten Ende liegender Schenkel (25).

## Claims

1. A wire protection basket (8) for protecting a suction basket (1) in the case of water withdrawal from open waters, comprising:
a volume enclosed by a braid;
an opening which is designed to receive at least one flange (4) of a screen (5) of the suction basket (1);
an edge (9) surrounding said opening; and
a fastening device (10) connected to the edge (9), which is designed for fastening to the suction basket (1);
**characterized in that**
the fastening device (10) is formed from one or several self-stable segments (15.1, 15.2), which are at least once interrupted in the circumferential direction;
at least one tensioning device (19) acting in the circumferential direction is provided, by means of which the circumference of the fastening device (10) can be varied;
the fastening device (10) has a U-shaped profile, wherein it is either provided that a limb (24) of the U lying at the lower end is longer than an upper limb (25),
or that some stops projecting beyond the diameter of the upper limb (25) are provided in the region of the lower limb (24),
wherein it is possible to open the structure to such an extent that the upper limb (25) is of a larger diameter than the largest diameter of the flange (4), and the smaller limb (24) always has a smaller diameter than the flange (4).

2. A wire protection basket (8) according to claim 1, **characterized in that** at least two ends (18.1, 18.2) of the segment or the segments (15.1, 15.2) which are adjacent in the circumferential direction are arranged at a distance from one another in at least one state of the tensioning device (19) and can be varied in their distance with respect to each other by the tensioning device (19) in the event of a change in the state of the tensioning device (19).

3. A wire protection basket (8) according to claim 1 or 2, **characterized in that** the circumference of the fastening device (10) is smaller in a tensioned state of the tensioning device (19) than in a non-tensioned state of the tensioning device (19).

4. A wire protection basket (8) according to claim 1, 2 or 3, **characterized in that** the segments (15.1, 15.2) are designed as ring segments.

5. A wire protection basket (8) according to one of the claims 1 to 4, **characterized in that** the fastening device (10) consists of two semicircular ring segments (15.1, 15.2), which are articulated to one another at their circumferentially adjacent ends (16.1, 16.2), and which are connected or connectable at their other circumferentially adjacent ends (18.1, 18.2) via the tensioning device (19).

6. A wire protection basket (8) according to one of the claims 1 to 5, **characterized in that** the fastening device (10) is designed in its cross-section for cooperating with a corresponding region of the suction basket (1).

7. A wire protection basket (8) according to one of the claims 1 to 6, **characterized in that** the edge (9) is connected to receptacles in the fastening device (10) via a plurality of loops (11) distributed around the circumference of the receiving opening or a spirally extending filament or tape.

8. A wire protection basket according to one of the claims 1 to 7, **characterized in that** the at least one tensioning device (19) is designed in the form of a toggle lever tensioner or a rotary toggle-type fastener.

9. A wire protection basket (8) according to one of claims 1 to 8, **characterized in that** the at least one tensioning device (19) is connected to the segments/segment directly or via a wrap-around means extending around the segments/segment in the circumferential direction.

10. A wire protection basket (8) according to one of the claims 1 to 9, **characterized in that** the at least one tensioning device (19) is self-locking in the tensioned state.

11. A wire protection basket (8) according to one of the claims 1 to 7, **characterized in that** the at least one tensioning device (19) is designed in the form of a folding clasp or a ratchet closure.

12. A wire protection basket (8) according to one of the claims 1 to 11, **characterized in that** the limb (24) lying on the end facing the suction basket (8) is formed longer over the entire circumference than the limb (25) disposed on the end facing away on the suction basket (8).

13. A wire protection basket (8) according to one of the claims 1 to 11, **characterized in that** the limb (24) disposed on the end facing the suction basket (8) is formed longer on at least three points distributed over the circumference than the limb (25) on the end facing away from the suction basket (8).

## Revendications

1. Crépine de protection en grillage (8) pour la protection d'une crépine d'aspiration (1) dans un captage d'eaux de surface, avec :
un volume délimité par un treillis,
une ouverture conçue pour recevoir au moins une bride (4) d'un filtre (5) de la crépine d'aspiration (1),
un bord (9) entourant l'ouverture et
un dispositif de fixation (10) relié au bord (9) qui est conformé en vue de la
fixation sur la crépine d'aspiration (1), **caractérisée en ce que**
le dispositif de fixation (10) est formé par un ou plusieurs segments (15.1, 15.2) ayant une stabilité propre, interrompus au moins une fois ;
il est prévu au moins un dispositif de serrage (19) agissant sur la circonférence, par lequel la circonférence du dispositif de fixation (10) peut être modifiée ;
le dispositif de fixation (10) présente un profil en forme de U dans lequel il est prévu soit qu'un bras (24) du U situé à l'extrémité inférieure est plus long qu'un bras supérieur (25), soit que quelques butées dépassant du diamètre du bras supérieur (25) sont prévues au niveau du bras inférieur (24),
avec la possibilité d'ouvrir suffisamment la structure pour que le bras supérieur (25) se trouve sur un plus grand diamètre que le plus grand diamètre de la bride (4) et que le petit bras (24) ait toujours un plus petit diamètre que la bride (4).

2. Crépine de protection en grillage (8) selon la revendication 1, **caractérisée en ce qu'**au moins deux extrémités (18.1, 18.2) du ou des segment (15.1, 15.2) voisines dans le sens de la circonférence sont disposées à distance l'une de l'autre dans au moins un état du dispositif de serrage (19) et la distance entre elles peut être modifiée par le dispositif de serrage (19) en modifiant l'état du dispositif de serrage (19).

3. Crépine de protection en grillage (8) selon la revendication 1 ou 2, **caractérisée en ce que** la circonférence du dispositif de fixation (10) est plus petite quand le dispositif de serrage (19) est tendu que quand le dispositif de serrage (19) n'est pas tendu.

4. Crépine de protection en grillage (8) selon la revendication 1, 2 ou 3, **caractérisée en ce que** les segments (15.1, 15.2) sont réalisés comme des segments d'anneau.

5. Crépine de protection en grillage (8) selon l'une des revendications 1 à 4, **caractérisée en ce que** le dispositif de fixation (10) se compose de deux segments d'anneau (15.1, 15.2) en demi-cercle, reliés l'un à l'autre de façon articulée à leur extrémités (16.1, 16.2) voisines dans le sens de la circonférence et qui sont ou peuvent être reliés à leurs autres extrémités (18.1, 18.2) voisines dans le sens de la circonférence par le dispositif de serrage (19).

6. Crépine de protection en grillage (8) selon l'une des revendications 1 à 5, **caractérisée en ce que** le dispositif de fixation (10) a une section conformée de façon à coopérer avec une zone correspondante de la crépine d'aspiration (1).

7. Crépine de protection en grillage (8) selon l'une des revendications 1 à 6, **caractérisée en ce que** le bord (9) est relié à des logements dans le dispositif de fixation (10) par plusieurs boucles (11) réparties sur la circonférence de l'ouverture de logement ou par un filament ou bandeau en spirale.

8. Crépine de protection en grillage (8) selon l'une des revendications 1 à 7, **caractérisée en ce que** l'au moins un dispositif de serrage (19) est réalisé sous la forme d'un tendeur à genouillère ou d'une fermeture à tendeur tournant.

9. Crépine de protection en grillage (8) selon l'une des revendications 1 à 8, **caractérisée en ce que** l'au moins un dispositif de serrage (19) est relié avec le ou les segments, directement ou par un moyen d'encerclement passant autour du ou des segments dans le sens de la circonférence.

10. Crépine de protection en grillage (8) selon l'une des revendications 1 à 9, **caractérisée en ce que** l'au moins un dispositif de serrage (19) est autobloquant dans l'état tendu.

11. Crépine de protection en grillage (8) selon l'une des revendications 1 à 7, **caractérisée en ce que** l'au moins un dispositif de serrage (19) est réalisé sous la forme d'une fermeture à boucle déployante repliable ou d'une fermeture à cliquet.

12. Crépine de protection en grillage (8) selon l'une des revendications 1 à 11, **caractérisée en ce que** le bras (24) situé à l'extrémité tournée vers la crépine d'aspiration (8) est plus long sur toute la circonférence que le bras (25) situé à l'extrémité opposée à la crépine d'aspiration (8).

13. Crépine de protection en grillage (8) selon l'une des revendications 1 à 11, **caractérisée en ce que** le bras (24) situé à l'extrémité tournée vers la crépine d'aspiration (8) est plus long en au moins 3 points répartis sur la circonférence que le bras (25) situé à l'extrémité opposée à la crépine d'aspiration (8).
